# EUROPEAN PATENT APPLICATION

(11) **EP 1 489 048 A1**
(43) Date of publication of application: **22.12.2004**
(21) Application number: 04253579.9
(22) Date of filing: 15.06.2004
(51) Int. Cl.: C02F 1/50, B67D 3/00

(54) **Drinking-water supply apparatus**

(30) Priority: 19.06.2003 JP 2003175047
(71) Applicant: Sanden Corporation, Isesaki-shi, Gunma 372-8502 (JP)
(72) Inventor: Watanabe, Kazushige c/o Sanden Corporation, Isesaki-shi, Gunma 372-8502 (JP); Ito, Miwako c/o Sanden Corporation, Isesaki-shi, Gunma 372-8502 (JP); Suga, Takaaki c/o Sanden Corporation, Isesaki-shi, Gunma 372-8502 (JP); Sato, Motoharu c/o Sanden Corporation, Isesaki-shi, Gunma 372-8502 (JP)
(74) Representative: Haley, Stephen

(57) **Abstract**

A apparatus for supplying drinking-water has a drinking-water storage unit (1), a drinking-water supply system (2) capable of introducing the drinking-water into a drinking cup (4) from the drinking-water storage unit (1), and an antimicrobial member (100) provided in the drinking-water supply system (2). This allows easy bacteriostasis or sterilization of the drinking-water poured from the nozzle (24). Further, an activity effect of the antimicrobial member (100) inhibits the growth of bacteria in the drinking-water supply system (2).

## Description

The present invention relates to a drinking-water supply apparatus for supplying cooled or heated drinking-water or the like.

A known invention relating to a drinking-water supply apparatus is described in Japanese Patent Laid-Open No. 2000-85893.

In this drinking-water supply apparatus, drinking-water is supplied from a drinking-water storage unit that stores drinking-water to a cold water tank and a hot water tank, and cold water is generated by a cooling device in the cold water tank, while hot water is generated by a heater in the hot water tank. The cold water is poured from a nozzle when a cold water pouring valve is opened, and the hot water is poured from the nozzle when a hot water pouring valve is opened.

The drinking-water in the cold water tank is circulated, while the drinking-water is sterilized with ultraviolet light from an ultraviolet lamp to inhibit the growth of bacteria in the cold water tank.

However, the conventional drinking-water supply apparatus includes only a structure of sterilization by ultraviolet irradiation, and in order to inhibit the growth of bacteria in places other than the cold water tank, for example, a drinking-water pipe between the cold water tank and the nozzle, or the nozzle, such places have to be individually irradiated with ultraviolet light, thus increasing the size of a device for ultraviolet irradiation, which is a problem. Further, the drinking-water is circulated by a pump for bacteriostasis and sterilization, thus increasing the size of the device and also running costs.

In view of the above described problems, an object of the invention is to provide a drinking-water supply apparatus that uses an antimicrobial member to easily inhibit the growth of bacteria in any places.

A apparatus for supplying drinking-water comprising: a drinking-water storage unit for storing the drinking-water; a drinking-water supply system capable of introducing the drinking-water into a drinking-water cup from the drinking-water storage unit; and an antimicrobial member provided in at least part of the drinking-water supply system.

According to the invention, an inner surface of the drinking-water supply system is coated with the antimicrobial member, or the antimicrobial member is placed on the inner surface of the drinking-water supply system. This allows easy bacteriostasis or sterilization of the drinking-water. Further, an activity effect of the antimicrobial member inhibits the growth of bacteria in the water passage.

The above described and other objects, features, and advantages of the invention will become apparent from the following description and the accompanying drawings.
FIG. 1 is a schematic sectional view of a drinking-water supply apparatus according to a first embodiment;
FIG. 2A is a vertical sectional view of a nozzle according to the first embodiment;
FIG. 2B is a cross sectional view taken along the line A-A in FIG. 2A viewed in the direction of the arrows;
FIG. 3A is a vertical sectional view of a nozzle according to a second embodiment;
FIG. 3B is a cross sectional view taken along the line B-B in FIG. 3A viewed in the direction of the arrows;
FIG. 4A is a vertical sectional view of a nozzle according to a third embodiment;
FIG. 4B is a cross sectional view taken along the line C-C in FIG. 4A viewed in the direction of the arrows;
FIG. 5A is a vertical sectional view of a nozzle according to a fourth embodiment;
FIG. 5B is a cross sectional view taken along the line D-D in FIG. 5A viewed in the direction of the arrows;
FIG. 6A is a vertical sectional view of a nozzle according to a fifth embodiment;
FIG. 6B is a cross sectional view taken along the line E-E in FIG. 6A viewed in the direction of the arrows;
FIG. 7A is a vertical sectional view of a nozzle according to a sixth embodiment;
FIG. 7B is a cross sectional view taken along the line F-F in FIG. 7A viewed in the direction of the arrows;
FIG. 8A is a vertical sectional view of a nozzle according to a seventh embodiment;
FIG. 8B is a cross sectional view taken along the line G-G in FIG. 8A viewed in the direction of the arrows;
FIG. 9 is a front view of an upper water introduction pipe according to an eighth embodiment;
FIG. 10 is an enlarged sectional view of the upper water introduction pipe according to the eighth embodiment;
FIG. 11 is an enlarged sectional view of an upper water introduction pipe according to a ninth embodiment;
FIG. 12 is a front view, partially broken away, of an upper water introduction pipe according to a tenth embodiment;
FIG. 13 is a water circuit diagram according to an eleventh embodiment;
FIG. 14 is a water circuit diagram according to a twelfth embodiment; and
FIG. 15 is a sectional view of a filter device according to the twelfth embodiment.

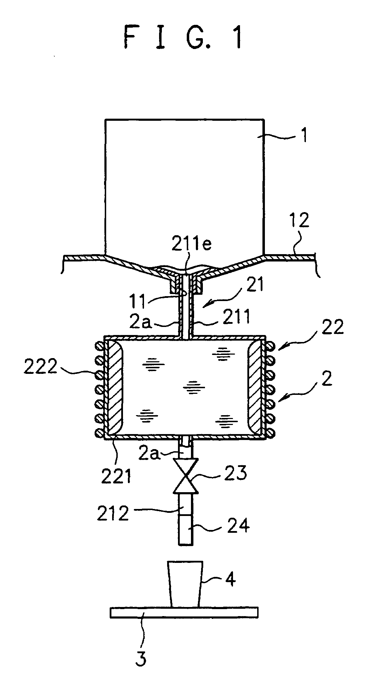

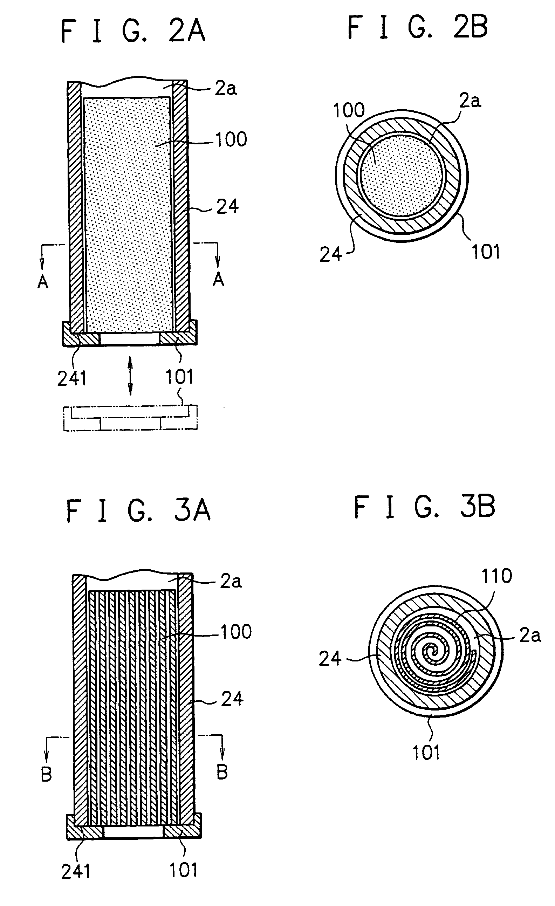

FIGS. 1, 2A and 2B show a first embodiment of a drinking-water supply apparatus according to the invention.

A general configuration of the drinking-water supply apparatus will be described with reference to FIG. 1. The drinking-water supply apparatus includes a drinking-water storage unit 1 that stores drinking-water such as tap water, mineral water, juice, or a carbonated drink, a drinking-water supply system 2 connecting to the drinking-water storage unit 1, and a receptacle 3 that receives drinking-water poured from the drinking-water supply system 2. Besides the components 1 to 3, the drinking-water supply apparatus includes devices such as a cooling device, but FIG. 1 shows a structure only relating to the invention.

The drinking-water storage unit 1 is a container that stores, for example, mineral water, and a bottle or a tank is used as the drinking-water storage unit 1. The drinking-water storage unit 1 is provided on a storage unit support 12 with a spout 11 facing downward so that the mineral water flows down through the spout 11.

The drinking-water supply system 2 includes a drinking-water pipe 21 constituted by an upper water introduction pipe 211 and a lower water introduction pipe 212, a cold water generation tank 22, an on/off valve 23, and a nozzle 24. The components 21 to 24 each include a water passage 2a to pass the mineral water through the water passage 2a.

The upper water introduction pipe 211 is connected at an upper end (an inlet 211e) thereof to the spout 11 of the drinking-water storage unit 1, and connected at a lower end thereof to the cold water generation tank 22. The lower water introduction pipe 212 is connected at an upper end thereof to the cold water generation tank 22, and connected at a lower end thereof to the nozzle 24. The on/off valve 23 is provided in the lower water introduction pipe 212. For a manual type, the on/off valve 23 is an on/off cock, and for an automatic type, the on/off valve 23 is a solenoid valve opened/closed by water supply/stop signals from an unshown control device.

A coil type evaporator 222 is provided on an outer surface of a tank body 221 of the cold water generation tank 22. A refrigerant from an unshown cooling device is circulated through the coil type evaporator 222 so as to cool the inside of the tank body 221. The upper water introduction pipe 211 connects to the cold water generation tank 22 as described above, and thus the drinking-water in the drinking-water storage unit 1 is supplied through the upper water introduction pipe 211. This causes the mineral water to be cooled in the tank body 221. The lower water introduction pipe 212 also connects to the cold water generation tank 22 as described above, and thus the mineral water is introduced from the cold water generation tank 22 when the on/off valve 23 is opened, to pour the cooled mineral water through the nozzle 24 into a drinking-water cup 4 on the receptacle 3.

In the drinking-water supply apparatus configured as described above, the invention includes a structure having an antimicrobial member 100 placed in the water passage 2a of the nozzle 24. The antimicrobial member 100 uses, for example, a porous material such as ceramics and zeolite, a foam material such as foam metal and foam resin, or a filter medium formed of fibers, as a substrate. The porous material, the foam material, or the filter medium is coated with titanium phosphate based compound that is an antimicrobial agent.

Unlike a photocatalyst such as titanium oxide, the titanium phosphate based compound offers activity effects (an antimicrobial effect, a deodorization effect, a fungus resistant effect, bacteriostatic and sterilization effects) even without irradiation. Thus, the titanium phosphate based compound offers a superior activity effect even in a place beyond the reach of light such as the inside of the nozzle 24.

Coating with the titanium phosphate based compound is performed as follows. First, for example, a filter medium is immersed in a solution containing the titanium phosphate based compound to impregnate the filter medium with the titanium phosphate based compound. Then, the filter medium is lifted out of the solution and dried. This causes the filter medium to be coated with the titanium phosphate based compound in the form of an antimicrobial coating.

A holding ring 101 that holds the antimicrobial member 100 is mounted to an opening end 241 of the nozzle 24. The holding ring 101 has an opening in the center thereof with threads on the periphery. An outer peripheral surface of the nozzle 24 also has threads near the opening end 241. As shown in FIG. 2A, the holding ring 101 is screwed on the nozzle 24 and thus mounted, and the antimicrobial member 100 is held in the nozzle 24 by the holding ring 101. On the other hand, when the holding ring 101 is loosened and removed from the nozzle 24, the antimicrobial member 100 can be taken out of the nozzle 24.

According to the embodiment, when the on/off valve 23 is opened, the mineral water in the cold water generation tank 22 passes through the antimicrobial member 100 and is poured into the cup 4 on the receptacle 3. When the mineral water passes through the antimicrobial member 100, dust in the mineral water is removed, and besides, bacteria in the mineral water are suppressed or killed by the activity effect of the antimicrobial member 100. When the on/off valve 23 is closed, part of the mineral water remains in the nozzle 24. Then, bacteria in the remaining mineral water is suppressed or killed by the activity effect of the antimicrobial member 100.

Because microbes enter the nozzle 24 through the opening end 241, bacteria are most apt to grow in the nozzle 24. In the embodiment, the antimicrobial member 100 is placed in the very nozzle 24, and the activity effect of the antimicrobial member 100 also works on the nozzle 24, thus ensuring inhibition of the growth of bacteria in the nozzle 24.

FIGS. 3A and 3B show a second embodiment of a drinking-water supply apparatus according to the invention. The same components as in the first embodiment are denoted by the same reference numerals, and descriptions thereof will be omitted.

In this embodiment, an antimicrobial member 110 uses a stainless steel sheet in the form of a spiral with predetermined intervals as a substrate. Like the first embodiment, titanium phosphate based compound is used as an antimicrobial coating on the substrate.

According to the embodiment, when mineral water flows in a water passage 2a of a nozzle 24, and passes through a gap formed by the antimicrobial member 110, or when the mineral water remains in the nozzle 24, bacteria in the mineral water are suppressed or killed by an activity effect of the antimicrobial member 110. Other effects are the same as in the first embodiment.

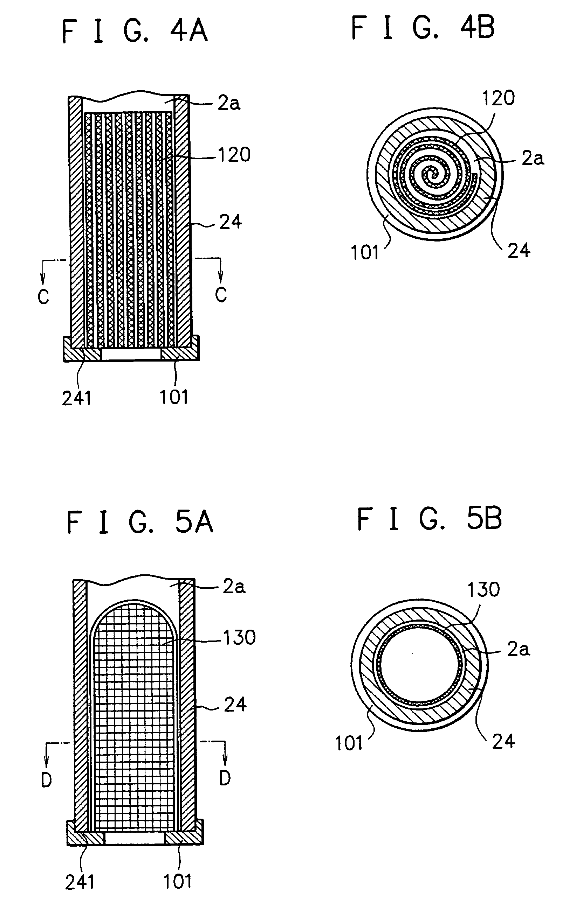

FIGS. 4A and 4B show a third embodiment of a drinking-water supply apparatus according to the invention. The same components as in the first embodiment are denoted by the same reference numerals, and descriptions thereof will be omitted.

In this embodiment, an antimicrobial member 120 uses a stainless steel mesh sheet in the form of a spiral with predetermined intervals as a substrate. Like the first embodiment, titanium phosphate based compound is used as an antimicrobial coating on the substrate.

According to the embodiment, when mineral water flows in a water passage 2a of a nozzle 24, and passes through a mesh or a gap formed by the sheet of the antimicrobial member 120, or when the mineral water remains in the nozzle 24, bacteria in the mineral water are suppressed or killed by an activity effect of the antimicrobial member 120. Dust in the mineral water is also caught by the antimicrobial member 120 to pour purified mineral water. Other effects are the same as in the first embodiment.

FIGS. 5A and 5B show a fourth embodiment of a drinking-water supply apparatus according to the invention. The same components as in the first embodiment are denoted by the same reference numerals, and descriptions thereof will be omitted.

In this embodiment, an antimicrobial member 130 uses stainless steel wires woven into a cylinder with an opening at a lower end as a substrate. Like the first embodiment, titanium phosphate based compound is used as an antimicrobial coating on the substrate.

According to the embodiment, when mineral water flows in a water passage 2a of a nozzle 24, and passes through the inside of the antimicrobial member 130 through a mesh thereof, or when the mineral water remains in the nozzle 24, bacteria in the mineral water are suppressed or killed by an activity effect of the antimicrobial member 130. Dust in the mineral water is also caught by the antimicrobial member 130 to pour purified mineral water. Other effects are the same as in the first embodiment.

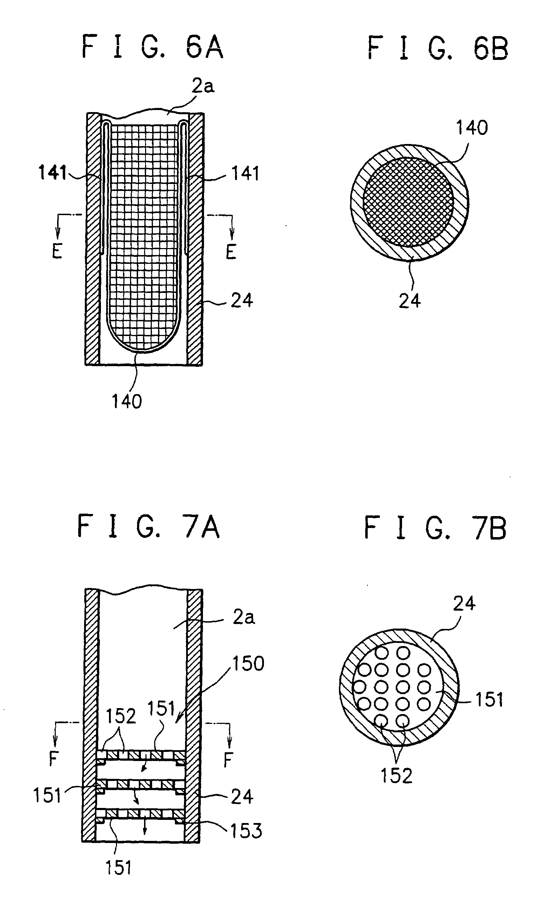

FIGS. 6A and 6B show a fifth embodiment of a drinking-water supply apparatus according to the invention. The same components as in the first embodiment are denoted by the same reference numerals, and descriptions thereof will be omitted.

In this embodiment, an antimicrobial member 140 uses the substrate in the fourth embodiment being placed upside down (woven into a cylinder with an opening at an upper end). Further, wires of the substrate are bent along an inner surface of a nozzle 24, and the bent wires 141 are pressed against the inner surface of the nozzle 24. This allows the antimicrobial member 140 to be held in the nozzle 24 to eliminate the need for the holding ring according to the former embodiments. Like the first embodiment, titanium phosphate based compound is used as an antimicrobial coating on the substrate.

According to the embodiment, when mineral water flows in a water passage 2a of the nozzle 24, and passes through the inside of the antimicrobial member 140 through a mesh thereof, or when the mineral water remains in the nozzle 24, bacteria in the mineral water are suppressed or killed by an activity effect of the antimicrobial member 140. Dust in the mineral water is also caught by the antimicrobial member 140 to pour purified mineral water. Other effects are the same as in the first embodiment.

FIGS. 7A and 7B show a sixth embodiment of a drinking-water supply apparatus according to the invention. The same components as in the first embodiment are denoted by the same reference numerals, and descriptions thereof will be omitted.

In this embodiment, an antimicrobial member 150 uses a plurality of partition plates 151 placed in tiers from an upstream side to a downstream side as a substrate. The partition plates 151 each have numbers of water passing holes 152 at predetermined intervals. The partition plates 151 are vertically spaced apart by annular support plates 153. Vertically adjacent partition plates 151 are placed so that opposite water passing holes 152 are not aligned with each other. Like the first embodiment, titanium phosphate based compound is used as an antimicrobial coating on the substrate.

According to the embodiment, when mineral water flows in a water passage 2a of a nozzle 24, and passes through the water passing holes 152 of the partition plates 151 from the upstream side to the downstream side, or when the mineral water remains in the nozzle 24, bacteria in the mineral water are suppressed or killed by an activity effect of the antimicrobial member 150.

Further, the vertically adjacent partition plates 151 are placed so that the opposite water passing holes 152 are not aligned with each other, and thus, as shown by the arrows in FIG. 7A, the mineral water meanders to increase contact time between the mineral water and the antimicrobial member 150. This improves bacteriostatic and sterilization effects of the mineral water. Other effects are the same as in the first embodiment.

Alternatively, the following structure may be adopted to increase contact time between the mineral water and the antimicrobial member 150. Specifically, the velocity of flow of the mineral water is generally faster near the center in the nozzle 24, and slower near the peripheral surface. Thus, water passing holes 152 near the center each have a smaller diameter, and water passing holes 152 near the peripheral surface each have a larger diameter. This allows a uniform velocity of flow of the mineral water in the nozzle 24, and offers an activity effect working on the entire mineral water.

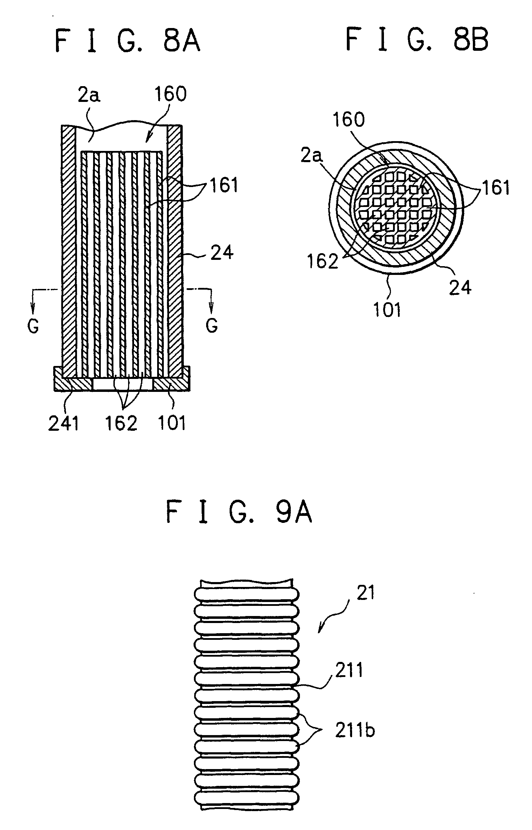

FIGS. 8A and 8B show a seventh embodiment of a drinking-water supply apparatus according to the invention. The same components as in the first embodiment are denoted by the same reference numerals, and descriptions thereof will be omitted.

In this embodiment, an antimicrobial member 160 uses a water passing body having a plurality of channels 162 partitioned by diaphragms 161 in the form of a lattice as a substrate. The channels 162 vertically penetrate so that mineral water is divided into the channels 162 to flow. Like the first embodiment, titanium phosphate based compound is used as an antimicrobial coating on the substrate.

According to the embodiment, when the mineral water flows in a water passage 2a of a nozzle 24 and is divided to pass through the channels 162, or when the mineral water remains in the nozzle 24, bacteria in the mineral water are suppressed or killed by an activity effect of the antimicrobial member 160. Further, the mineral water is divided into the plurality of channels 162 to increase contact areas between the mineral water and the antimicrobial coating, thus improving the activity effect. A section of each channel 162 is formed in a substantial square, but may be formed in any shape such as a circle or a hexagon. Other effects are the same as in the first embodiment.

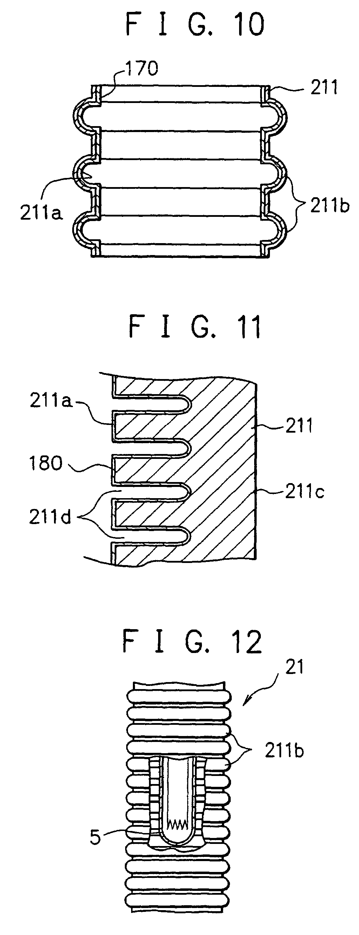

FIGS. 9 and 10 show an eighth embodiment of a drinking-water supply apparatus according to the invention. The same components as in the first embodiment are denoted by the same reference numerals, and descriptions thereof will be omitted.

In the above described embodiments, examples are described in which the substrate coated with the antimicrobial coating is used as the antimicrobial members 100 to 160, and the antimicrobial members 100 to 160 each are placed in the nozzle 24 of the drinking-water supply system 2. In this embodiment, on the other hand, an antimicrobial member 170 is formed on a drinking-water pipe 21 of a drinking-water supply system 2.

Specifically, an inner surface 211a of an upper water introduction pipe 211 of the drinking-water pipe 21 is coated with titanium phosphate based compound to form an antimicrobial coating (the antimicrobial member 170) on the inner surface 211a. The upper water introduction pipe 211 has annular protrusions 211b protruding outward. A plurality of protrusions 211b are vertically spaced apart to form numbers of projections and recesses in the inner surface 211a of the upper water introduction pipe 211.

According to the embodiment, when mineral water passes through the upper water introduction pipe 211, bacteria in the mineral water are suppressed or killed by an activity effect of the antimicrobial member 170. The inner surface 211a of the upper water introduction pipe 211 has the projections and recesses to increase contact areas between the mineral water and the antimicrobial member 170, thus ensuring bacteriostasis and sterilization of the mineral water. Further, the inner surface 211a of the upper water introduction pipe 211 is coated with the antimicrobial member 170 to inhibit the growth of bacteria on the inner surface 211a of the upper water introduction pipe 211. The antimicrobial member 170 is formed on the upper water introduction pipe 211, but the antimicrobial member 170 may be formed on a lower water introduction pipe 212.

FIG. 11 shows a ninth embodiment of a drinking-water supply apparatus according to the invention. The same components as in the eighth embodiment are denoted by the same reference numerals, and descriptions thereof will be omitted.

In the drinking-water supply apparatus according to the eighth embodiment, the inner surface 211a of the upper water introduction pipe 211 coated with the antimicrobial coating has the projections and recesses, while in a drinking-water supply apparatus according to this embodiment, an inner wall 211c of an upper water introduction pipe 211 has numbers of blind holes 211d, and an inner surface 211a is coated with an antimicrobial member 180 (titanium phosphate based compound).

According to the embodiment, the numbers of blind holes 211d formed in the inner wall 211c increase contact areas between the mineral water and the antimicrobial coating, thus ensuring bacteriostasis and sterilization of the mineral water. Other configurations and effects are the same as in the eighth embodiment.

FIG. 12 shows a tenth embodiment of a drinking-water supply apparatus according to the invention. The same components as in the eighth embodiment are denoted by the same reference numerals, and descriptions thereof will be omitted.

In the drinking-water supply apparatus according to this embodiment, an ultraviolet irradiation device (an ultraviolet lamp) 5 is placed in the upper water introduction pipe 211 according to the eighth embodiment.

According to the embodiment, bacteria in mineral water are suppressed or killed by an antimicrobial member and also by ultraviolet light, thus further improving a purifying effect of the mineral water. A photocatalyst such as titanium dioxide, tungsten trioxide, or zinc oxide may be used as an antimicrobial member. Other configurations and effects are the same as in the eighth embodiment.

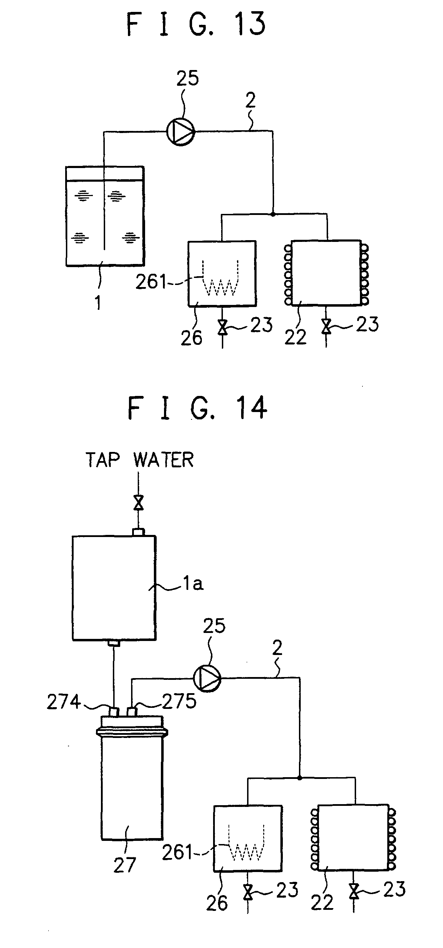

FIG. 13 shows an eleventh embodiment of a drinking-water supply apparatus according to the invention. The same components as in the first embodiment are denoted by the same reference numerals, and descriptions thereof will be omitted.

In the first to tenth embodiments, examples are described in which the mineral water flows down from the drinking-water storage unit 1 by gravity, but a drinking-water storage unit 1 may be separately and externally provided to feed mineral water by a pump 25. In the first to tenth embodiments, examples are also described in which the drinking-water supply system 2 has the cold water generation tank 22, but a hot water generation tank 26 incorporating a heater 261 may be placed in parallel with a cold water generation tank 22 in a drinking-water supply system 2.

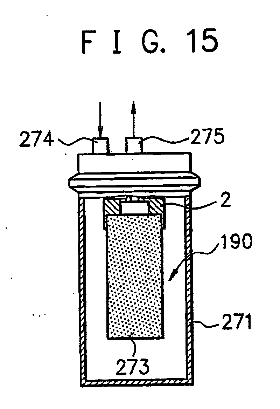

FIGS. 14 and 15 show a twelfth embodiment of a drinking-water supply apparatus according to the invention. The same components as in the eleventh embodiment are denoted by the same reference numerals, and descriptions thereof will be omitted.

In this embodiment, a mineral water generation tank 1a corresponding to the drinking-water storage unit 1 in the eleventh embodiment is provided, and a filter device 27 for purifying mineral water is provided in the drinking-water supply system 2 in the eleventh embodiment. The mineral water generation tank 1a is already known, and includes an unshown mineral eluting member such as granite porphyry or coral sand. A pair of electrodes across which a DC voltage is applied are placed. When the DC voltage is applied across the electrodes, mineral elutes in stored tap water to generate mineral water. As shown in FIG. 15, the filter device 27 has a filter medium 273 hung on a holder 272 in a filter tank 271. The mineral water flowing into the filter tank through an inlet 274 is purified by the filter medium 273, and the purified mineral water flows out through an outlet 275. In the filter device 27 thus configured, an antimicrobial member 190 according to the embodiment uses the filter medium 273 as a substrate, which is coated with titanium phosphate based compound.

According to the embodiment, bacteria in the mineral water flowing into the filter device 27 are suppressed and killed by an activity effect of the titanium phosphate based compound. No bacteria grow in the filter medium 273.

In the first to seventh embodiments, the antimicrobial members 100 to 160 each are placed in the nozzle 24, but an inner surface of the nozzle 24 may be coated with an antimicrobial member. A detachable nozzle 24 allows easy replacement of antimicrobial members. In the eighth and ninth embodiments, the drinking-water pipe 21 of the drinking-water supply system 2 is coated with the antimicrobial members 170 and 180, but an unshown substrate coated with an antimicrobial member and detachably placed may be used for the drinking-water pipe 21.

Besides the placement of the antimicrobial members and the coating positions described in the embodiments 1 to 11, an antimicrobial member may be placed in or coat any places in the drinking-water supply system 2. For example, an antimicrobial member may be placed in or coat an inlet 211a of the drinking-water supply system 2.

Further, when the drinking-water storage unit 1 is cooled by an unshown cooling device, the growth of bacteria in the drinking-water storage unit 1 is inhibited. In the embodiments, examples are described in which the mineral water is used, but it is apparent that the invention may be applied to any drinking-water such as tap water, juice, or a carbonated drink.

Further, in the embodiments, the titanium phosphate based compound is used as the antimicrobial member, but titanium oxide compound may be used.

## Claims

1. A apparatus for supplying drinking-water comprising:
a drinking-water storage unit (1) for storing the drinking-water;
a drinking-water supply system (2) capable of introducing the drinking-water into a drinking-water cup (4) from the drinking-water storage unit (1); and
an antimicrobial member (100) provided in at least part of the drinking-water supply system (2).

2. The apparatus according to claim 1, wherein
the drinking-water supply system (2) has inlet (211e) connecting to the drinking-water storage unit (1), a nozzle (24) for supplying the drinking-water, and a drinking-water pipe (21) connecting the inlet (211e) with the nozzle (24); and
the antimicrobial member (100) is provided in at least one of the inlet (211e), the nozzle (24), and the drinking-water pipe (21).

3. The apparatus according to claim 2, wherein
the antimicrobial member (100) includes an antimicrobial coating on an inside of the drinking-water supply system (2).

4. The apparatus according to claim 3, wherein
a part coated with the antimicrobial coating is detachable.

5. The apparatus according to claim 2, wherein
the antimicrobial member (100) includes a permeable substrate and an antimicrobial coating on the substrate.

6. The apparatus according to claim 5, wherein
the substrate is formed of a filter medium such as fibers.

7. The apparatus according to claim 5, wherein
the substrate is formed of a porous material such as ceramics.

8. The apparatus according to claim 5, wherein
the substrate is formed of a mesh sheet.

9. The apparatus according to claim 2, wherein
the antimicrobial member (120) includes a spiral substrate having a gap in a flow direction of the drinking-water, and an antimicrobial coating on the substrate.

10. The apparatus according to claim 2, wherein
the antimicrobial member (110) includes a substrate having a plurality of channels in a flow direction of the drinking-water, and an antimicrobial coating on the substrate.

11. The apparatus according to claim 2, wherein
the antimicrobial member (150) includes a substrate having partition plates (151) opposite each other in a flow direction of the drinking-water, the partition plates (151) having water passing holes (152) opposite each other in the flow direction of the drinking-water, and an antimicrobial coating on the substrate.

12. The drinking-water supply apparatus according to claim 1, wherein
the antimicrobial member (100) is detachable from the drinking-water supply system (2).

13. The drinking-water supply apparatus according to claim 3, wherein
the antimicrobial coating includes titanium oxide compound.

14. The apparatus according to claim 3, wherein
the antimicrobial coating includes titanium phosphate based compound.

15. The apparatus according to claim 2, wherein
the antimicrobial member (170) is provided on the drinking-water pipe (21) having projections and recesses on an inner surface thereof.

16. The apparatus according to claim 2, wherein
the antimicrobial member (180) is provided on the drinking-water pipe (21) having a plurality of blind holes (211d) in an inner wall (211c) thereof.

17. The apparatus according to claim 2, wherein
a filter device (27) for removing impurities in the drinking-water is provided in the drinking-water pipe (21), and a filter medium (273) in the filter device (27) is coated with an antimicrobial member (190).

18. The apparatus according to claim 2, wherein
the ultraviolet irradiation device (5) for emitting ultraviolet light is provided in at least a part of the drinking-water supply system (2) having the antimicrobial member (180).

19. The apparatus according to claim 2,further comprising
a cooling unit for cooling the drinking-water storage unit.
